# FASCICULE DE BREVET EUROPEEN

(11) **EP 3 172 061 B1**
(45) Date de publication et mention de la délivrance du brevet: **12.02.2020**
(21) Numéro de dépôt: 15736826.7
(22) Date de dépôt: 09.07.2015
(51) Int. Cl.: B60C 1/00, C08L 23/08

(54) **PNEUMATIQUE POUR AVION**
FLUGZEUGREIFEN
TIRE FOR AIRPLANE

(30) Priorité: 22.07.2014 FR 1457054
(43) Date de publication de la demande: 31.05.2017
(73) Titulaire: Compagnie Générale des Etablissements Michelin, 63000 Clermont-Ferrand (FR)
(72) Inventeur: ARAUJO DA SILVA, José, Carlos, F-63040 Clermont-Ferrand Cedex 9 (FR); ABAD, Mathilde, F-63040 Clermont-Ferrand Cedex 9 (FR); TRIGUEL, Aurélie, F-63040 Clermont-Ferrand Cedex 9 (FR)
(74) Mandataire: Gandon-Pain, Sylvie
(86) Numéro de dépôt international: PCT/EP2015/065757
(87) Numéro de publication internationale: WO 2016/012259

(56) Documents cités:
- US-A- 4 801 641

## Description

La présente invention est relative aux pneumatiques destinés à équiper des avions.

De manière connue, un pneumatique pour avion doit résister à des conditions de pression, de charge et de vitesse élevées. De plus il doit satisfaire également des exigences de résistance à l'usure et d'endurance. Par endurance, on entend l'aptitude du pneumatique à résister au cours du temps aux sollicitations cycliques auxquelles il est soumis. Lorsque la bande de roulement d'un pneumatique d'avion est usée, ce qui marque la fin d'une première vie d'utilisation, le pneumatique est rechapé, c'est-à-dire que la bande de roulement usée est remplacée par une nouvelle bande de roulement pour permettre une deuxième vie d'utilisation. Une résistance à l'usure améliorée permet d'effectuer un plus grand nombre d'atterrissages par vie d'utilisation. Une endurance améliorée permet d'augmenter le nombre de vies d'utilisation d'un même pneumatique.

Il est connu d'utiliser dans les bandes de roulement de pneumatique d'avion, des compositions de caoutchouc à base de caoutchouc naturel et de noir de carbone, ces deux éléments principaux permettant d'obtenir des compositions possédant des propriétés compatibles avec les conditions d'usage d'un pneumatique d'avion. En plus de ces éléments principaux, ces compositions comprennent les additifs usuels de ce type de compositions tels qu'un système de vulcanisation et des agents de protections.

De telles compositions de bande de roulement de pneumatique d'avion sont utilisées depuis de nombreuses années et présentent des propriétés mécaniques leur permettant de résister aux conditions d'usure très particulières des pneumatiques d'avion. En effet ces pneumatiques sont soumis à de très grandes variations de température et de vitesse, en particulier à l'atterrissage où ils doivent passer d'une vitesse nulle à une très grande vitesse, provoquant un échauffement et une usure considérables.

Il est donc toujours intéressant pour les industriels des pneumatiques d'avion de trouver des solutions plus performantes et plus résistantes, notamment plus résistantes aux conditions extrêmes d'usure engendrée à l'atterrissage des avions. Une étude (S. K. Clark « Touchdown dynamics », Precision Measurement Company, Ann Arbor, MI, NASA, Langley Research Center, Computational Modeling of Tires pages 9-19 publié en août 1995) a décrit les sollicitations auxquelles sont soumis les pneumatiques d'avion à l'atterrissage et proposé une méthode d'évaluation des performances des pneumatiques d'avion lors de ces sollicitations.
Lors de leurs recherches, les Demanderesses ont trouvé qu'une composition particulière des bandes de roulement de pneumatique pour avion pouvait améliorer les propriétés des pneumatiques d'avion, en particulier pour la phase d'atterrissage de ces pneumatiques.

En conséquence, l'invention concerne un pneumatique pour avion dont la bande de roulement comprend une composition de caoutchouc à base d'au moins un premier élastomère diénique, une charge renforçante et un système de réticulation, lequel premier élastomère diénique comprend des unités éthylène et des unités diéniques comportant une double liaison carbone-carbone, lesquelles unités sont distribuées statistiquement au sein du premier élastomère diénique, les unités éthylène représentant au moins 50% en mole de l'ensemble des unités monomères du premier élastomère diénique.

### I. DESCRIPTION DETAILLEE DE L'INVENTION :

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

De façon générale, un pneumatique comprend une bande de roulement, destinée à venir en contact avec le sol par l'intermédiaire d'une surface de roulement, et reliée par l'intermédiaire de deux flancs à deux bourrelets, destinés à assurer une liaison mécanique entre le pneumatique et la jante sur laquelle il est monté.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique pour avion comprend généralement une pluralité de couches de carcasse s'étendant entre les deux bourrelets et réparties entre une première et une deuxième famille.

La première famille est constituée par des couches de carcasse, s'enroulant, dans chaque bourrelet, de l'intérieur vers l'extérieur du pneumatique, autour d'un élément de renforcement circonférentiel, appelé tringle, pour former un retournement dont l'extrémité est généralement radialement extérieure au point le plus radialement extérieur de la tringle. Le retournement est la portion de couche de carcasse comprise entre le point le plus radialement intérieur de la couche de carcasse et son extrémité. Les couches de carcasse de la première famille sont les couches de carcasse les plus proches de la cavité intérieure du pneumatique et donc les plus axialement intérieures, dans les flancs.

La deuxième famille est constituée par des couches de carcasse s'étendant, dans chaque bourrelet, de l'extérieur vers l'intérieur du pneumatique, jusqu'à une extrémité généralement radialement intérieure au point le plus radialement extérieur de la tringle. Les couches de carcasse de la deuxième famille sont les couches de carcasse les plus proches de la surface extérieure du pneumatique et donc les plus axialement extérieures, dans les flancs.

Usuellement, les couches de carcasse de la deuxième famille sont positionnées, sur toute leur longueur, à l'extérieur des couches de carcasse de la première famille, c'est-à-dire qu'elles enveloppent, en particulier, les retournements des couches de carcasse de la première famille. Chaque couche de carcasse de la première et de la deuxième famille est constituée d'éléments de renforcement parallèles entre eux, faisant, avec la direction circonférentielle, un angle compris entre 80° et 100°.

Les éléments de renforcement des couches de carcasse sont le plus souvent des câbles constitués de filés de filaments textiles, préférentiellement en polyamide aliphatique ou en polyamide aromatique, et caractérisés par leurs propriétés mécaniques en extension. Les éléments de renforcement textiles subissent une traction sur une longueur initiale de 400 mm à une vitesse nominale de 200 mm/min. Tous les résultats sont une moyenne de 10 mesures.

En utilisation, un pneumatique pour avion est soumis à une combinaison de charge et de pression induisant un taux de flexion élevé, typiquement supérieur à 30% (par exemple à 32% ou 35%). Le taux de flexion d'un pneumatique est, par définition, sa déformation radiale, ou sa variation de hauteur radiale, lorsque celui-ci passe d'un état gonflé non chargé à un état gonflé chargé en statique, dans des conditions de pression et de charge telles que définies, par exemple, par la norme de la Tyre and Rim Association ou TRA. Il est défini par le rapport de la variation de la hauteur radiale du pneumatique sur la moitié de la différence entre le diamètre extérieur du pneumatique, mesuré en statique dans un état non chargé gonflé à la pression de référence, et le diamètre maximum de la jante, mesuré sur le rebord de jante. La norme TRA définit en particulier l'écrasement d'un pneumatique d'avion par son rayon écrasé, c'est-à-dire par la distance entre l'axe de la roue du pneumatique et le plan du sol avec lequel le pneumatique est en contact dans les conditions de pression et de charge de référence.

Un pneumatique pour avion est par ailleurs soumis à une pression de gonflage élevée, typiquement supérieure à 9 bars. Ce niveau de pression élevé implique un nombre important de couches de carcasse, car l'armature de carcasse est dimensionnée pour assurer la résistance du pneumatique à ce niveau de pression avec un coefficient de sécurité élevé. A titre d'exemple, l'armature de carcasse d'un pneumatique dont la pression d'usage, telle que recommandée par la norme TRA, est égale à 15 bars, doit être dimensionnée pour résister à une pression égale à 60 bars, dans l'hypothèse d'un coefficient de sécurité égal à 4. Avec les matériaux textiles couramment utilisés pour les éléments de renforcement, tels que les polyamides aliphatiques ou les polyamides aromatiques, l'armature de carcasse peut, par exemple, comprendre au moins 5 couches de carcasse.

En utilisation, les sollicitations mécaniques de roulage induisent des cycles de flexion dans les bourrelets du pneumatique, qui s'enroulent sur les rebords de jante. Ces cycles de flexion génèrent en particulier, dans les portions de couches de carcasse situées dans la zone de flexion sur jante, des variations de courbure combinées avec des variations d'allongement des éléments de renforcement des couches de carcasse. Ces variations d'allongement ou déformations, en particulier dans les couches de carcasse les plus axialement extérieures, peuvent avoir des valeurs minimales négatives, correspondant à une mise en compression. Cette mise en compression est susceptible d'induire une rupture par fatigue des éléments de renforcement et donc une dégradation prématurée du pneumatique.

Ainsi, le pneumatique pour avion selon l'invention est préférentiellement un pneumatique pour avion qui est soumis lors de son utilisation à une combinaison de charge et de pression induisant un taux de flexion supérieur à 30.

De même, le pneumatique pour avion selon l'invention est préférentiellement un pneumatique pour avion comprenant en plus de la bande de roulement, une structure interne comprenant une pluralité de couches de carcasse s'étendant entre les deux bourrelets et réparties entre une première et une deuxième famille, la première famille étant constituée par des couches de carcasse, s'enroulant, dans chaque bourrelet, de l'intérieur vers l'extérieur du pneumatique et la deuxième famille étant constituée par des couches de carcasse s'étendant, dans chaque bourrelet, de l'extérieur vers l'intérieur du pneumatique.

La composition de la bande de roulement des pneumatiques pour avion selon l'invention comprend un premier élastomère diénique qui comprend des unités éthylène et des unités diéniques comportant une double liaison carbone-carbone, lesquelles unités sont distribuées statistiquement au sein du premier élastomère diénique, les unités éthylène représentant au moins 50% en mole de l'ensemble des unités monomères du premier élastomère diénique.

Selon un mode de réalisation préférentiel de l'invention, le premier élastomère diénique comprend les unités UA, UB, UC et UD suivantes, lesquelles unités UA, UB, UC et UD sont distribuées statistiquement au sein du premier élastomère diénique,

UA) -CH₂-CH₂-

selon un pourcentage molaire de m%

UB) -CH₂-R₁C=CR₂-CH₂-

selon un pourcentage molaire de n% 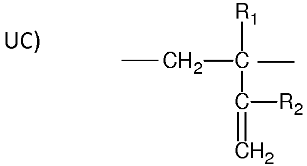 selon un pourcentage molaire de o% 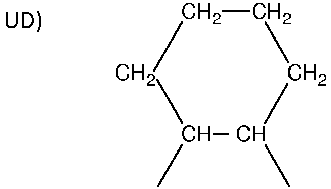 selon un pourcentage molaire de p%
▪ R₁ et R₂, identiques ou différents, désignant un atome d'hydrogène, un radical méthyle ou un radical phényle substitué ou non en position ortho, méta ou para par un radical méthyle,
▪ m ≥ 50
▪ 0 < o + p ≤ 25
▪ n + o >0
▪ m, n, o et p étant des nombres allant de 0 à 100
▪ les pourcentages molaires respectifs de m, n, o, et p étant calculés sur la base de la somme de m + n + o + p qui est égale à 100.

Selon un mode de réalisation particulier de l'invention, le premier élastomère diénique contient des unités UE distribuées statistiquement au sein du premier élastomère diénique : 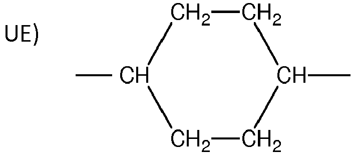 selon un pourcentage molaire de q%
▪ o + p + q ≥ 10
▪ q ≥ 0
▪ les pourcentages molaires respectifs de m, n, o, p et q étant calculés sur la base de la somme de m + n +o + p + q qui est égale à 100.

Alors que le motif de l'unité UD forme un cycle hydrocarboné bivalent à 6 atomes de carbone de type 1,2-cyclohexane, le motif de l'unité UE forme un cycle hydrocarboné bivalent à 6 atomes de carbone de type 1,4-cyclohexane.

Selon un autre mode de réalisation de l'invention, le premier élastomère diénique contient des unités UF distribuées statistiquement au sein du premier élastomère diénique, 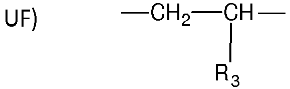 selon un pourcentage molaire de r%
▪ R₃ désignant un radical alkyle ayant de 1 à 4 atomes de carbone ou un radical aryle,
▪ 0≤ r ≤25, de préférence 0≤ r ≤10,
▪ les pourcentages molaires respectifs de m, n, o, p et r étant calculés sur la base de la somme de m+ n + o + p + r qui est égale à 100.

Selon ce mode de réalisation particulier de l'invention, le premier élastomère diénique peut comprendre q% d'unités UE distribuées statistiquement au sein du premier élastomère diénique, auquel cas les pourcentages molaires respectifs de m, n, o, p, q et r sont calculés sur la base de la somme de m+ n + o + p + q + r qui est égale à 100.

Il est entendu que le premier élastomère diénique peut être constitué par un mélange d'élastomères qui contiennent les unités UA, UB, UC, UD, UE et UF selon les pourcentages molaires respectifs m, n, o, p, q et r tels que définis précédemment et qui se différencient des uns des autres par leur macrostructure ou leur microstructure, en particulier par le taux molaire respectif des unités UA, UB, UC, UD, UE et UF.

Selon l'un quelconque des modes de réalisation de l'invention, de préférence le premier élastomère diénique ne contient pas d'unité UF.

Selon un mode de réalisation de l'invention, au moins l'un des deux pourcentages molaires p et q est de préférence différent de 0. Autrement dit, de préférence le premier élastomère diénique contient au moins l'un des motifs qui sont un cycle hydrocarboné bivalent à 6 atomes de carbone de type 1,2-cyclohexane et un cycle hydrocarboné bivalent à 6 atomes de carbone de type 1,4-cyclohexane. De manière plus préférentielle p est strictement supérieur à 0.

Selon un mode de réalisation de l'invention, le premier élastomère diénique présente au moins un des critères suivants, et préférentiellement tous:
▪ m ≥ 65
▪ n + o + p + q ≥ 15, de préférence encore 20
▪ 10 ≥ p + q ≥ 2
▪ 1 ≥ n / (o + p + q)
▪ lorsque q est non nul, 20 ≥ p / q ≥ 1

Selon un autre mode de réalisation préférentiel de l'invention, le premier élastomère diénique contient comme unités monomères uniquement les unités UA, UB, UC, UD et UE selon leur pourcentage molaire respectif m, n, o, p et q, de préférence tous différents de 0.

Selon un autre mode de réalisation préférentiel de l'invention, le premier élastomère diénique contient comme unités monomères uniquement les unités UA, UB, UC et UD selon leur pourcentage molaire respectif m, n, o et p, de préférence tous différents de 0.

Selon l'un quelconque des modes de réalisations de l'invention, les unités UB présentes dans le polymère conforme à l'invention ont de préférence la configuration trans représentée par la formule suivante :

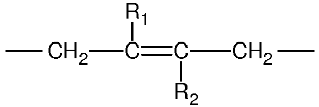

Selon l'un quelconque des modes de réalisation de l'invention, le premier élastomère diénique présente de préférence une masse molaire moyenne en nombre (Mn) d'au moins 60 000 g/mol et d'au plus 1 500 000 g/mol. Le polymère diénique de départ utile aux besoins de l'invention présente de préférence un indice de polydispersité Ip, égal à Mw/Mn (Mw étant la masse molaire moyenne en poids) compris entre 1,20 et 3,00. Les valeurs de Mn, Mw et Ip sont mesurées selon la méthode décrite dans le paragraphe II.1.

Le premier élastomère diénique peut être obtenu selon différentes méthodes de synthèses connues de l'homme du métier, notamment en fonction des valeurs visées de m, n, o, p, q et r. Généralement, le premier élastomère diénique peut être préparé par copolymérisation d'au moins un monomère diène conjugué et d'éthylène et selon des méthodes de synthèse connues, en particulier en présence de système catalytique comprenant un complexe métallocène. On peut citer à ce titre les systèmes catalytiques à base de complexes métallocènes, lesquels systèmes catalytiques sont décrits dans les documents EP 1 092 731 A1, EP 1 554 321 A1, EP 1 656 400 A1, EP 1 829 901 A1, EP 1 954 705 A1, EP 1 957 506 A1, au nom des Demanderesses.

A titre de monomère diène conjugué convient notamment un diène conjugué ayant de 4 à 12 atomes de carbone. On peut citer le 1,3-butadiène, le 2-méthyl-1,3-butadiène, 2,3-diméthyl-1,3-butadiène, un aryl-1,3-butadiène, le 1,3-pentadiène Selon un aspect préférentiel, le monomère diène est le 1,3-butadiène ou du 2-méthyl-1,3-butadiène, plus préférentiellement le 1,3-butadiène, auquel cas R₁ et R₂ représentent chacun un hydrogène.

Ainsi, selon certaines de ces méthodes de synthèse, le premier élastomère diénique peut être obtenu par copolymérisation d'au moins un monomère diène conjugué et de l'éthylène, en présence d'un système catalytique comprenant un complexe métallocène de lanthanide avec des ligands *ansa* de type fluorényle. On peut citer à ce titre les complexes métallocènes décrits dans les documents EP 1 092 731 A1, EP 1 554 321 A1, EP 1 954 705 A1.

Le premier élastomère diénique qui contient des unités UF selon un mode de réalisation particulier de l'invention peut être obtenu par copolymérisation d'au moins un monomère diène conjugué et de deux oléfines, telles que l'éthylène et une alpha-oléfine, en présence d'un système catalytique comprenant un complexe métallocène de lanthanide avec des ligands de type *ansa* cyclopentadiényle-fluorényle. A titre de monomère alpha-oléfine convient par exemple une alpha-oléfine ayant de 3 à 18 atomes de carbone, avantageusement ayant 3 à 6 atomes de carbone. On peut citer le propylène, le butène, le pentène, l'hexène ou un mélange de ces composés. Comme termonomère associé à au moins un monomère diène conjugué et l'éthylène, on peut aussi citer un dérivé du styrène. Les systèmes catalytiques à base de complexes métallocènes peuvent être ceux décrits dans les documents EP 1 092 731 A1, EP 1 656 400 A1, EP 1 829 901 A1, EP 1 957 506 A1, au nom des Demanderesses.

Le premier élastomère diénique peut être préparé conformément aux documents cités précédemment, en adaptant les conditions de polymérisation par des moyens connus de l'homme de l'art, de manière à atteindre des valeurs de masse molaire moyenne en nombre (Mn) d'au moins 60 000 g/mol. A titre d'illustration, le temps de polymérisation peut être significativement augmenté de telle sorte que la conversion en monomère soit supérieure, conduisant alors à l'obtention de masses molaires d'au moins 60 000 g/mol. A titre d'illustration, lors de la préparation des systèmes catalytiques selon les documents cités précédemment, la stœchiométrie de l'agent d'alkylation par rapport au(x) complexe(s) métallocène(s) est diminuée, de manière à diminuer les réactions de transfert de chaîne et permettre l'obtention de masses molaires d'au moins 60 000 g/mol.

Selon une première variante de l'invention, la composition de caoutchouc comprend en outre un second élastomère, de préférence diénique, c'est-à-dire comprenant des unités monomères diéniques. Selon l'un quelconque des modes de réalisation de la première variante de l'invention, le taux du second élastomère est de préférence inférieur à 50 pce.

Le deuxième élastomère peut être un élastomère diénique "essentiellement insaturé" ou "essentiellement saturé". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles), lesquelles unités d'origine diénique comportent une double liaison carbone-carbone ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, le second élastomère diénique susceptible d'être utilisé dans les compositions conformes à l'invention peut être:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone ;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène.

Le second élastomère est de préférence un élastomère diénique fortement insaturé choisi dans le groupe constitué par les polybutadiènes, les polyisoprènes, les copolymères de butadiène, les copolymères d'isoprène et les mélanges de ces élastomères, ou bien un copolymère ternaire obtenu par copolymérisation d'éthylène, d'une α-oléfine ayant 3 à 6 atomes de carbone avec un monomère diène non conjugué ayant de 6 à 12 atomes de carbone, en particulier un EPDM.

Selon une deuxième variante de l'invention, le premier élastomère diénique est le seul élastomère de la composition de caoutchouc.

La charge renforçante, connue pour ses capacités à renforcer une composition de caoutchouc utilisable pour la fabrication de pneumatiques, peut être un noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le noir de carbone présente une surface spécifique BET de préférence d'au moins 90 m²/g, de manière plus préférentielle d'au moins 100 m²/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300 (grade ASTM), comme par exemple les noirs N115, N134, N234, N375. Les noirs de carbone peuvent être utilisés à l'état isolé, tels que disponibles commercialement, ou sous tout autre forme, par exemple comme support de certains des additifs de caoutchouterie utilisés. La surface spécifique BET des noirs de carbone est mesurée selon la norme D6556-10 [méthode multipoints (au minimum 5 points) - gaz : azote - domaine de pression relative P/P0 : 0.1 à 0.3].

Selon un mode de réalisation de l'invention, la charge renforçante comprend aussi une charge inorganique renforçante. Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Dans le présent exposé, en ce qui concerne la silice, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

Conviennent en particulier, sans que la définition ci-après soit limitative, des silanes polysulfurés répondant à la formule générale (I) suivante:

(I) Z-A-Sₓ-A-Z,

dans laquelle:
- x est un entier de 2 à 8 (de préférence de 2 à 5) ;
- les symboles A, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 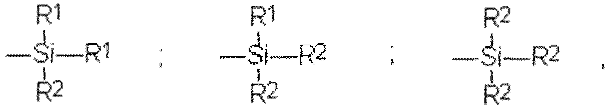 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.
A titre d'exemples d'autres organosilanes, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

La teneur en agent de couplage est avantageusement inférieure à 12 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 9 pce, plus préférentiellement compris dans un domaine allant de 3 à 9 pce. Ce taux est aisément ajusté par l'homme du métier selon le taux de charge inorganique utilisé dans la composition.

Selon un mode de réalisation préférentiel de l'invention, la charge renforçante est constituée à 100% en masse d'un noir de carbone.

Selon un autre mode de réalisation de l'invention, le taux de charge renforçante est compris dans un domaine allant de 20 à 70 pce, de préférence de 25 à 50 pce. Ces plages de taux de charge renforçante peuvent s'appliquer à l'un quelconque des modes de réalisation de l'invention.

Le système de réticulation peut être à base soit de soufre, soit de donneurs de soufre et/ou de peroxyde et/ou de bismaléimides. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition de caoutchouc peut comporter également tout ou partie des additifs usuels habituellement utilisés dans les compositions d'élastomères destinées à constituer des bandes de roulement, comme par exemple des plastifiants, des pigments, des agents de protection tels que cires anti-ozone, anti-ozonants chimiques, anti-oxydants, des agents anti-fatigue.

Selon un mode de réalisation préférentiel de l'invention, la composition de caoutchouc contient de 0 à 20 pce d'un plastifiant liquide, de préférence elle est dépourvue de tout plastifiant liquide.

Un plastifiant est considéré comme liquide lorsque, à 23°C, il a la capacité de prendre à terme la forme de son contenant, cette définition étant donnée par opposition aux résines plastifiantes qui sont par nature solides à température ambiante. Comme plastifiant liquide, on peut citer les huiles végétales, les huiles minérales, les plastifiants éthers, esters, phosphates, sulfonates et leurs mélanges.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

La composition de caoutchouc conforme à l'invention, peut être soit à l'état cru (avant réticulation ou vulcanisation), soit à l'état cuit (après réticulation ou vulcanisation), peut être un produit semi-fini qui peut être utilisé dans un pneumatique, notamment dans une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION :

### II.1-Mesures et tests utilisés :

### II.1-a) Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### II.1-b) Perte de masse

Cet essai permet de déterminer la perte de masse d'un échantillon de composition de bande de roulement de pneumatique pour avion, lorsqu'il est soumis à un test d'abrasion sur un abrasimètre à haute vitesse.

Le test d'abrasion à haute vitesse est réalisé selon le principe décrit dans l'article de S. K. Clark « Touchdown dynamics », Precision Measurement Company, Ann Arbor, MI, NASA, Langley Research Center, Computational Modeling of Tires pages 9-19 publié en août 1995.

Le matériau de bande de roulement frotte sur une surface telle qu'un disque Norton Vulcan A30S-BF42. La vitesse linéaire lors du contact est de 70 m/s avec une pression moyenne de contact de 15 à 20 bars. Le dispositif est conçu pour frotter jusqu'à épuisement d'une l'énergie de 10 à 20 MJ/m² de surface de contact.

Les éléments du dispositif de tribométrie à énergie constante selon l'article de S.K. Clark mentionné ci-dessus sont un moteur, un embrayage, un plateau tournant et un porte échantillon.

La performance est évaluée sur la base de la perte de masse selon la formule suivante : Performance perte de masse = perte de masse témoin / perte de masse échantillon. Les résultats sont exprimés en base 100. Une performance pour l'échantillon supérieure à 100 est considérée comme meilleure que le témoin.

### II.1-c) Rhéométrie

Les mesures sont effectuées à 150°C avec un rhéomètre à chambre oscillante, selon la norme DIN 53529 - partie 3 (juin 1983). L'évolution du couple rhéométrique, ΔCouple (en dN.m), en fonction du temps décrit l'évolution de la rigidification de la composition par suite de la réaction de vulcanisation. Les mesures sont traitées selon la norme DIN 53529 - partie 2 (mars 1983) : T₀ est le délai d'induction, c'est-à-dire le temps nécessaire au début de la réaction de vulcanisation ; T_{α} (par exemple T₉₉) est le temps nécessaire pour atteindre une conversion de α%, c'est-à-dire α% (par exemple 99%) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

### II.2-Préparation des compositions :

Les compositions, en l'espèce C1 et T1 dont la formulation en pce figure dans le tableau I, sont préparées de la manière suivante :
On introduit dans un mélangeur interne (taux de remplissage final : environ 70% en volume), dont la température initiale de cuve est d'environ 80°C, successivement les élastomères diéniques, la charge renforçante, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 70 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leurs propriétés physiques ou mécaniques, soit extrudées sous la forme d'une bande de roulement de pneumatique avion, puis sont vulcanisées.

Les compositions C1 et T1 sont identiques, hormis la nature de l'élastomère et le taux de soufre. La composition C1 qui contient l'élastomère E1 est destinée à être utilisé comme bande de roulement de pneumatique pour avion conforme à l'invention, la composition T1 qui contient du caoutchouc naturel est une composition conventionnelle utilisée comme bande de roulement de pneumatique pour avion.

L'élastomère E1 est synthétisé par copolymérisation de l'éthylène et du 1,3-butadiène comportant 71% molaire d'unité éthylène, le complément à 100% étant constitué par les unités 1,3-butadiène, réparties sous la forme des unités UA, UB, UC et UD selon les pourcentages molaires donnés dans le tableau II. Il est préparé selon un procédé de polymérisation conforme à l'exemple 4-2 du brevet EP 1 954 705 B1 au nom des Demanderesses. Le temps de polymérisation a été ajusté de manière à obtenir une masse molaire Mn = 153 000 g/mol avec un indice de polydispersité égal à 1.9.

La différence de la structure chimique des élastomères C1 et T1 induit un comportement des compositions C1 et T1 vis-à-vis de la vulcanisation qui est aussi différent, ce qui a conduit à ajuster le taux de soufre selon la composition à vulcaniser pour obtenir une cinétique de cuisson plus rapide et un temps de cuisson acceptable pour l'homme du métier. Les constantes de vitesse K, les valeurs de T₀, T₉₀ et T₉₉ des compositions C1 et T1 figurent dans le tableau I.

### II.3-Propriétés à cuit des compositions de caoutchouc :

Le résultat de cet essai qui figure dans le tableau I montre que la performance perte de masse de la composition C1 est doublée par rapport au témoin T1 dans un test d'abrasion à haute vitesse, reconnu comme un descripteur laboratoire spécifique des conditions extrêmes d'atterrissage sur sol. Ainsi, le pneumatique avion conforme à l'invention qui a pour bande de roulement la composition C1 est deux fois plus performant pour résister aux conditions extrêmes d'atterrissage que le pneumatique avion dont la bande de roulement est constituée d'une composition conventionnellement utilisée à base de caoutchouc naturel.

En résumé, le pneumatique conforme à l'invention présente une performance à l'atterrissage fortement améliorée, notamment vis-à-vis de la résistance à l'usure à très haute vitesse.

**Tableau I**

| Composition | T1 | C1 |
|---|---|---|
| NR (1) | 100 | - |
| Elastomère E1 | - | 100 |
| Noir de carbone (2) | 30 | 30 |
| Antioxydant (3) | 1,5 | 1,5 |
| Acide stéarique (4) | 2,5 | 2,5 |
| Oxyde de Zinc (5) | 3 | 3 |
| Accélérateur (6) | 2,0 | 2,0 |
| Soufre | 0,8 | 1,5 |
| Performance perte de masse (%) | 100 | 180 |
| Rhéométrie | | |
| K (min⁻¹) | 0,41 | 0.18 |
| T₀ (min) | 6 | 9 |
| T₉₀ (min) | 12 | 22 |
| T₉₉ (min) | 17 | 34 |

| | | |
|---|---|---|
| (1) Caoutchouc naturel (2) N234 selon la norme ASTM D-1765 (3) N-1,3-diméthylbutyl-N-phénylparaphénylènediamine « Santoflex 6-PPD » de la société Flexsys (4) Stéarine « Pristerene 4931 » de la société Uniqema (5) Oxyde de zinc de grade industriel de la société Umicore (6) N-cyclohexyl-2-benzothiazyle sulfénamide « Santocure CBS » de la société Flexsys | | |

**Tableau II**

| | |
|---|---|
| Motif UA | 71 |
| Motif UB | 8 |
| Motif UC | 14 |
| Motif UD | 7 |

**Tableau III**

| Composition | T1 | C1 |
|---|---|---|
| Performance perte de masse (%) | 100 | 180 |

## Revendications

1. Pneumatique avion dont la bande de roulement comprend une composition de caoutchouc à base d'au moins un premier élastomère diénique, une charge renforçante et un système de réticulation, lequel premier élastomère diénique comprend des unités éthylène et des unités diéniques comportant une double liaison carbone-carbone, lesquelles unités sont distribuées statistiquement au sein du premier élastomère diénique, les unités éthylène représentant au moins 50% en mole de l'ensemble des unités monomères du premier élastomère diénique.

2. Pneumatique selon la revendication 1 dans lequel le premier élastomère diénique comprend les unités UA, UB, UC et UD suivantes distribuées statistiquement au sein du premier élastomère diénique,
UA) -CH₂-CH₂-
selon un pourcentage molaire de m%
UB) -CH₂-R₁C=CR₂-CH₂-
selon un pourcentage molaire de n% 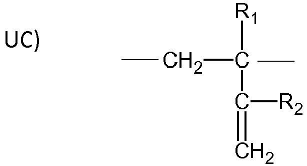 selon un pourcentage molaire de o% 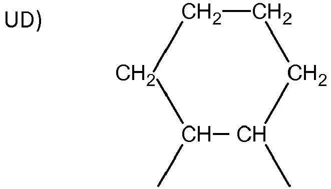 selon un pourcentage molaire de p%
▪ R₁ et R₂, identiques ou différents, désignant un atome d'hydrogène, un radical méthyle ou un radical phényle substitué ou non en position ortho, méta ou para par un radical méthyle,
▪ m ≥ 50
▪ 0 < o + p ≤ 25
▪ n + o >0
▪ m, n, o et p étant des nombres allant de 0 à 100
▪ les pourcentages molaires respectifs de m, n, o, et p étant calculés sur la base de la somme de m + n + o + p qui est égale à 100.

3. Pneumatique selon la revendication 2 dans lequel le premier élastomère diénique contient des unités UE distribuée statistiquement au sein du premier élastomère diénique, 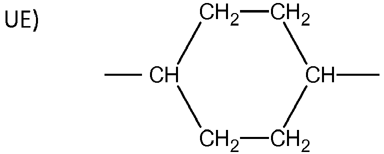 selon un pourcentage molaire de q%
▪ o + p + q ≥ 10
▪ q ≥ 0
▪ les pourcentages molaires respectifs de m, n, o, p et q étant calculés sur la base de la somme de m + n + o + p + q qui est égale à 100.

4. Pneumatique selon la revendication 2 ou 3 dans lequel le premier élastomère diénique contient des unités UF distribuées statistiquement au sein du premier élastomère diénique. 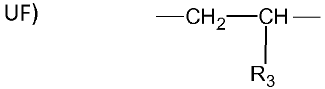 selon un pourcentage molaire de r%
▪ R₃ désignant un radical alkyle ayant de 1 à 4 atomes de carbone ou un radical aryle,
▪ 0≤ r ≤25.
▪ les pourcentages molaires respectifs de m, n, o, p, q et r étant calculés sur la base de la somme de m+ n + o + p + q + r qui est égale à 100.

5. Pneumatique selon la revendication 4 dans lequel r est égal à 0.

6. Pneumatique selon l'une quelconque des revendications 2 à 5, dans lequel au moins l'un des deux pourcentages molaires p et q est différent de 0.

7. Pneumatique selon l'une quelconque des revendications 2 à 6, dans lequel p est strictement supérieur à 0.

8. Pneumatique selon l'une quelconque des revendications 2 à 7, dans lequel le premier élastomère diénique présente au moins un des critères suivants, et plus préférentiellement tous:
▪ m ≥ 65
▪ n + o + p + q ≥ 15, de préférence encore 20
▪ 10 ≥ p + q ≥ 2
▪ 1 ≥ n / (o + p + q)
▪ lorsque q est non nul, 20 ≥ p / q ≥ 1

9. Pneumatique selon l'une quelconque des revendications 3 à 8 dans lequel le premier élastomère diénique contient comme unités monomères uniquement les unités UA, UB, UC, UD et UE selon leur pourcentage molaire respectif m, n, o, p et q, de préférence tous différents de 0.

10. Pneumatique selon la revendication 2 ou l'une quelconque des revendications 4 à 8 dans lequel le premier élastomère diénique contient comme unités monomères uniquement les unités UA, UB, UC et UD selon leur pourcentage molaire respectif m, n, o et p, de préférence tous différents de 0.

11. Pneumatique selon l'une quelconque des revendications 1 à 10 dans lequel R₁ et R₂ sont identiques et désignent un atome d'hydrogène.

12. Pneumatique selon l'une quelconque des revendications 1 à 11 dans lequel la charge renforçante comprend un noir de carbone.

13. Pneumatique selon l'une quelconque des revendications 1 à 12 dans lequel la charge renforçante comprend une charge inorganique, de préférence une silice.

14. Pneumatique selon l'une quelconque des revendications 1 à 13 dans lequel le taux de charge renforçante est de 20 à 70 pce, de préférence de 25 à 50 pce.

15. Pneumatique selon l'une quelconque des revendications 1 à 14 dans lequel la composition de caoutchouc contient 0 à 20 pce d'un plastifiant liquide, de préférence le taux de plastifiant liquide est égal à 0.

## Patentansprüche

1. Flugzeugreifen, dessen Lauffläche eine Kautschukzusammensetzung auf Basis von mindestens einem ersten Dienelastomer, einem verstärkenden Füllstoff und einem Vernetzungssystem umfasst, wobei das erste Dienelastomer Ethylen-Einheiten und Dien-Einheiten mit einer Kohlenstoff-Kohlenstoff-Doppelbindung, die statistisch in dem ersten Dienelastomer verteilt sind, umfasst, wobei die Ethylen-Einheiten mindestens 50 Mol-% aller Monomereinheiten des ersten Dienelastomers ausmachen.

2. Reifen nach Anspruch 1, wobei das erste Dienelastomer die folgenden Einheiten UA, UB, UC und UD, die statistisch in dem ersten Dienelastomer verteilt sind, umfasst,
UA) -CH₂-CH₂-
gemäß einem Molprozentanteil von m %
UB) -CH₂-R₁C=CR₂-CH₂-
gemäß einem Molprozentanteil von n % 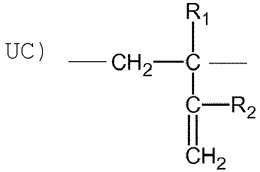 gemäß einem Molprozentanteil von o % 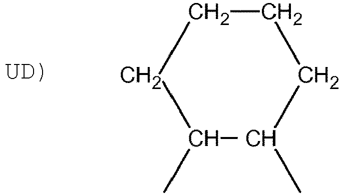 gemäß einem Molprozentanteil von p %,
▪ wobei R₁ und R₂, die gleich oder verschieden sind, für ein Wasserstoffatom, einen Methylrest oder einen Phenylrest, der in ortho-, meta- oder para-Position durch einen Methylrest substituiert oder unsubstituiert ist, stehen,
▪ m ≥ 50
▪ 0 < o + p ≤ 25
▪ n + o > 0
▪ m, n, o und p für Zahlen im Bereich von 0 bis 100 stehen,
▪ wobei die jeweiligen Molprozentanteile von m, n, o und p auf der Basis der Summe von m + n + o + p, die gleich 100 ist, berechnet werden.

3. Reifen nach Anspruch 2, wobei das erste Dienelastomer Einheiten UE, die statistisch in dem ersten Dienelastomer verteilt sind, umfasst, 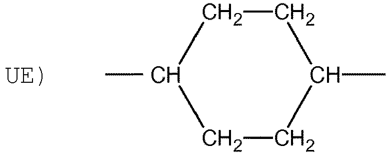 gemäß einem Molprozentanteil von q %,
▪ o + p + q ≥ 10
▪ q ≥ 0
▪ wobei die jeweiligen Molprozentanteile von m, n, o, p und q auf der Basis der Summe von m + n + o + p + q, die gleich 100 ist, berechnet werden.

4. Reifen nach Anspruch 2 oder 3, wobei das erste Dienelastomer Einheiten UF, die statistisch in dem ersten Dienelastomer verteilt sind, umfasst, 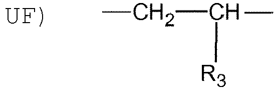 gemäß einem Molprozentanteil von r %,
▪ wobei R₃ für einen Alkylrest mit 1 bis 4 Kohlenstoffatomen oder einen Arylrest steht,
▪ 0 ≤ r ≤ 25
▪ wobei die jeweiligen Molprozentanteile von m, n, o, p, q und r auf der Basis der Summe von m + n + o + p + q + r, die gleich 100 ist, berechnet werden.

5. Reifen nach Anspruch 4, wobei r gleich 0 ist.

6. Reifen nach einem der Ansprüche 2 bis 5, wobei mindestens einer der beiden Molprozentanteile p und q von 0 verschieden ist.

7. Reifen nach einem der Ansprüche 2 bis 6, wobei p streng größer als 0 ist.

8. Reifen nach einem der Ansprüche 2 bis 7, wobei das erste Dienelastomer mindestens eines und vorzugsweise alle der folgenden Kriterien erfüllt:
▪ m ≥ 65
▪ n + o + p + q ≥ 15, noch weiter bevorzugt 20
▪ 10 ≥ p + q ≥ 2
▪ 1 ≥ n/ (o + p + q)
▪ wenn q ungleich null ist, 20 ≥ p/q ≥ 1.

9. Reifen nach einem der Ansprüche 3 bis 8, wobei das erste Dienelastomer als Monomereinheiten nur die Einheiten UA, UB, UC, UD und UE gemäß ihrem jeweiligen Molprozentanteil m, n, o, p bzw. q, die vorzugsweise alle von 0 verschieden sind, enthält.

10. Reifen nach Anspruch 2 oder einem der Ansprüche 4 bis 8, wobei das erste Dienelastomer als Monomereinheiten nur die Einheiten UA, UB, UC und UD gemäß ihrem jeweiligen Molprozentanteil m, n, o bzw. p, die vorzugsweise alle von 0 verschieden sind, enthält.

11. Reifen nach einem der Ansprüche 1 bis 10, wobei R₁ und R₂ gleich sind und für ein Wasserstoffatom stehen.

12. Reifen nach einem der Ansprüche 1 bis 11, wobei der verstärkende Füllstoff einen Ruß umfasst.

13. Reifen nach einem der Ansprüche 1 bis 12, wobei der verstärkende Füllstoff einen anorganischen Füllstoff, vorzugsweise eine Kieselsäure, umfasst.

14. Reifen nach einem der Ansprüche 1 bis 13, wobei der Gehalt an verstärkendem Füllstoff 20 bis 70 phe, vorzugsweise 25 bis 50 phe, beträgt.

15. Reifen nach einem der Ansprüche 1 bis 14, wobei die Kautschukzusammensetzung 0 bis 20 phe eines flüssigen Weichmachers enthält und der Gehalt an flüssigem Weichmacher vorzugsweise gleich 0 ist.

## Claims

1. Aircraft tyre, the tread of which comprises a rubber composition based on at least one first diene elastomer, a reinforcing filler and a crosslinking system, which first diene elastomer comprises ethylene units and diene units comprising a carbon-carbon double bond, which units are distributed randomly within the first diene elastomer, the ethylene units representing at least 50 mol% of the combined monomer units of the first diene elastomer.

2. Tyre according to Claim 1, in which the first diene elastomer comprises the following units UA, UB, UC and UD randomly distributed within the first diene elastomer,
UA) -CH₂-CH₂-
according to a molar percentage of m%
UB) -CH₂-R₁C=CR₂-CH₂-
according to a molar percentage of n% 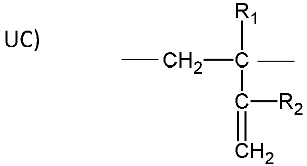 according to a molar percentage of o% 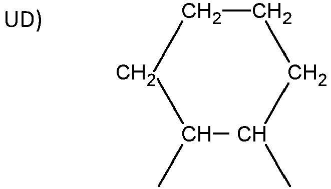 according to a molar percentage of p%
▪ R₁ and R₂, which are identical or different, denoting a hydrogen atom, a methyl radical or a phenyl radical which is unsubstituted or substituted in the ortho, meta or para position by a methyl radical
▪ m ≥ 50
▪ 0 < o + p ≤ 25
▪ n + o >0
▪ m, n, o and p being numbers ranging from 0 to 100
▪ the respective molar percentages of m, n, o and p being calculated on the basis of the sum of m + n + o + p, which is equal to 100.

3. Tyre according to Claim 2, in which the first diene elastomer contains units UE randomly distributed within the first diene elastomer, 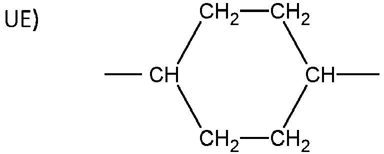 according to a molar percentage of q%
▪ o + p + q ≥ 10
▪ q ≥ 0
▪ the respective molar percentages of m, n, o, p and q being calculated on the basis of the sum of m + n + o + p + q, which is equal to 100.

4. Tyre according to Claim 2 or 3, in which the first diene elastomer contains units UF randomly distributed within the first diene elastomer, 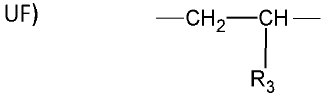 according to a molar percentage of r%
▪ R₃ denoting an alkyl radical having from 1 to 4 carbon atoms or an aryl radical
▪ 0 ≤ r ≤ 25
▪ the respective molar percentages of m, n, o, p, q and r being calculated on the basis of the sum of m + n + o+ p + q + r, which is equal to 100.

5. Tyre according to Claim 4, in which r is equal to 0.

6. Tyre according to any one of Claims 2 to 5, in which at least one of the two molar percentages p and q is different from 0.

7. Tyre according to any one of Claims 2 to 6, in which p is strictly greater than 0.

8. Tyre according to any one of Claims 2 to 7, in which the first diene elastomer exhibits at least one and more preferably all of the following criteria:
▪ m ≥ 65
▪ n + o + p + q ≥ 15, more preferably 20
▪ 10 ≥ p + q ≥ 2
▪ 1 ≥ n/(o + p + q)
▪ when q is non-zero, 20 ≥ p/q ≥ 1

9. Tyre according to any one of Claims 3 to 8, in which the first diene elastomer contains, as monomer units, only the units UA, UB, UC, UD and UE according to their respective molar percentages m, n, o, p and q, preferably all different from 0.

10. Tyre according to Claim 2 or any one of Claims 4 to 8, in which the first diene elastomer contains, as monomer units, only the units UA, UB, UC and UD according to their respective molar percentages m, n, o and p, preferably all different from 0.

11. Tyre according to any one of Claims 1 to 10, in which R₁ and R₂ are identical and denote a hydrogen atom.

12. Tyre according to any one of Claims 1 to 11, in which the reinforcing filler comprises a carbon black.

13. Tyre according to any one of Claims 1 to 12, in which the reinforcing filler comprises an inorganic filler, preferably a silica.

14. Tyre according to any one of Claims 1 to 13, in which the content of reinforcing filler is from 20 to 70 phr, preferably from 25 to 50 phr.

15. Tyre according to any one of Claims 1 to 14, in which the rubber composition contains from 0 to 20 phr of a liquid plasticizer, preferably the content of liquid plasticizer is equal to 0.
